(19) **Europäisches Patentamt European Patent Office Office européen des brevets**

(11) **EP 4 611 287 A1**

(12) **EUROPEAN PATENT APPLICATION**
published in accordance with Art. 153(4) EPC

(43) Date of publication:
03.09.2025 Bulletin 2025/36

(21) Application number: 23905838.1

(22) Date of filing: 15.12.2023

(51) International Patent Classification (IPC):
*H04L 1/00* (2006.01)

(52) Cooperative Patent Classification (CPC):
H04L 1/00; H04L 5/00; H04W 4/029

(86) International application number:
PCT/CN2023/139174

(87) International publication number:
WO 2024/131674 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.12.2022 CN 202211640739
16.02.2023 CN 202310144904

(71) Applicant: Huawei Technologies Co., Ltd.
Shenzhen, Guangdong 518129 (CN)

(72) Inventors:
- FAN, Liangliang
  Shenzhen, Guangdong 518129 (CN)
- XU, Haibo
  Shenzhen, Guangdong 518129 (CN)
- XUE, Lixia
  Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD AND COMMUNICATION DEVICE**

(57) This application provides a communication method and a communication apparatus. The method may be applied to a non-terrestrial communication network (non-terrestrial network, NTN) scenario. The method includes: A terminal device 1 receives information 1, information 2, and information 3. The information 1 includes a timing offset between a network device 1 and a network device 2. The information 2 is used to calculate a difference between a delay 1 and a delay 2. The delay 1 is a delay between the network device 1 and the terminal device 1, and the delay 2 is a delay between the network device 2 and the terminal device 1. The information 3 includes configuration information of a positioning reference signal 1. The terminal device 1 determines a search window 1 based on the information, and receives, in the search window 1, the positioning reference signal 1 from the network device 1. **In** this way, the terminal device 1 can be supported in correctly receiving the positioning reference signal from the network device 1 (for example, a given network device or a neighboring network device) in the NTN scenario.

FIG. 2

**Description**

This application claims priorities to Chinese Patent Application No. 202211640739.X, filed with the China National Intellectual Property Administration on December 20, 2022 and entitled "COMMUNICATION METHOD", and to Chinese Patent Application No. 202310144904.0, filed with the China National Intellectual Property Administration on February 16, 2023 and entitled "COMMUNICATION METHOD AND COMMUNICATION APPARATUS", both of which are incorporated herein by reference in their entireties.

**TECHNICAL FIELD**

This application relates to the field of communication technologies, and more specifically, to a communication method and a communication apparatus.

**BACKGROUND**

In a non-terrestrial communication network (non-terrestrial network, NTN) scenario, because locations of a reference network device and a given network device (which may alternatively be a neighboring network device) constantly change, a difference between a delay between a terminal device and the given network device and a delay between the terminal device and the reference network device is not fixed, and the difference is large.

To verify a location of the terminal device, the terminal device needs to measure positioning reference signals from the reference network device and the given network device, and report a measurement result of the positioning reference signals to a location management function (location management function, LMF). Because no connection is established between the terminal device and the given network device, the terminal device cannot directly receive the positioning reference signal sent by the given network device. However, the terminal device may receive, in a search window (for example, a time period) determined based on configuration information that is of the search window and that is sent by the LMF, the positioning reference signal sent by the given network device.

However, an interval between search window time determined by using the configuration information and time when the terminal device prepares to receive the positioning reference signal sent by the given network device may be large, and the delays/delay between the terminal device and the reference network device and/or the given network device may change greatly. Consequently, the terminal device may not correctly receive, based on the configuration information of the search window, the positioning reference signal sent by the given network device, and cannot support completion of verification of the location of the terminal device.

**SUMMARY**

This application provides a communication method and a communication apparatus, to support a terminal device in correctly receiving a positioning reference signal from a given network device or a neighboring network device in an NTN scenario.

According to a first aspect, a communication method is provided. The method may be applied to a terminal device. The method includes: receiving first information, second information, and third information, where the first information includes a timing offset between a first network device and a second network device, the second information is used to calculate a difference between a first delay and a second delay, the first delay is a delay between the first network device and the terminal device, the second delay is a delay between the second network device and the terminal device, and the third information includes configuration information of a first positioning reference signal; determining a search window based on the first information, the second information, and the third information; and receiving, in the search window, the first positioning reference signal from the first network device.

In this application, the terminal device determines the difference between the first delay and the second delay through calculation based on the second information delivered by a third network device (for example, an LMF), determines the proper search window with reference to the timing offset between the first network device and the second network device and the configuration information of the first positioning reference signal, and may correctly receive, in the search window, the positioning reference signal from the first network device (which may be a given network device or a neighboring network device, which is not limited).

According to the foregoing technical solution, in this application, the terminal device can be supported in correctly receiving the positioning reference signal from the first network device in an NTN scenario, positioning of the terminal device can be completed, and completion of verification of a location of the terminal device is supported.

In a possible implementation, the third information further includes configuration information of a second positioning reference signal, and the method further includes: receiving the second positioning reference signal from the second network device; measuring the first positioning reference signal and the second positioning reference signal, to obtain a measurement result; and sending the measurement result.

In this way, the verification of the location of the terminal device can be completed.

In a possible implementation, the second information includes non-terrestrial network assistance information, and the non-terrestrial network assistance information is used to determine the difference.

According to a second aspect, a communication method is provided. The method may be applied to a terminal device. The method includes: sending first information to a third network device, where the first information is used to determine a difference between a first delay and a second delay, the first delay is a delay between a first network device and the terminal device, and the second delay is a delay between a second network device and the terminal device; receiving second information from the third network device, where the second information is used to configure a search window, and the second information is associated with the first information; and receiving, in the search window, a first positioning reference signal from the first network device.

It may be understood that the first information reported by the terminal device to the third network device may include the difference between the first delay and the second delay, and the third network device may directly determine the difference between the first delay and the second delay based on the first information. Alternatively, the first information reported by the terminal device to the third network device may include information used to determine the difference between the first delay and the second delay, and the third network device may determine the difference between the first delay and the second delay based on the first information. This is not limited.

In this application, the terminal device exchanges information with the third network device (for example, an LMF), so that the third network device determines the difference between the first delay and the second delay, and delivers a configuration parameter of the search window to the terminal device. In this way, the terminal device can correctly receive, in the search window, the positioning reference signal from the first network device.

According to the foregoing technical solution, in this application, the terminal device can be supported in correctly receiving a positioning reference signal from a network device in an NTN scenario, to complete verification of a location of the terminal device.

In a possible implementation, the first information includes at least one of the following: location information of the terminal device, or first delay information between the terminal device and the first network device, and second delay information between the terminal device and the second network device.

In this way, the third network device can determine the difference between the delay between the terminal device and the first network device and the delay between the terminal device and the second network device based on the location information of the terminal device and locations of the first network device and the second network device, and properly configure the second information and send the second information to the terminal device, so that the terminal device can correctly receive the positioning reference signal from the first network device, to implement the verification of the location of the terminal device.

In a possible implementation, when the first information includes the location information of the terminal device, the first information further includes at least one of the following: first time information or second time information, where the first time information indicates generation time of the location information, and the second time information indicates validity duration of the location information.

In this way, the third network device can determine whether the location information of the terminal device is outdated, to properly configure the search window.

In a possible implementation, the second information further indicates validity duration of the search window.

In this way, the terminal device can receive, in a valid search window, the positioning reference signal from the first network device.

In a possible implementation, the method further includes: receiving a second positioning reference signal from the second network device; measuring the first positioning reference signal and the second positioning reference signal, to obtain a measurement result; and sending the measurement result to the third network device.

In this way, the verification of the location of the terminal device can be completed.

According to a third aspect, a communication method is provided. The method may be applied to a third network device. The method includes: determining first information, second information, and third information, where the first information includes a timing offset between a first network device and a second network device, the second information is used to calculate a difference between a first delay and a second delay, the first delay is a delay between the first network device and a terminal device, the second delay is a delay between the second network device and the terminal device, and the third information includes configuration information of a first positioning reference signal; sending the first information, the second information, and the third information to the terminal device, where the first information, the second information, and the third information are used to determine a search window, and the search window is used by the terminal device to receive the first positioning reference signal from the first network device.

In a possible implementation, the method further includes: receiving a measurement result from the terminal device, where the measurement result is obtained by the terminal device by measuring the first positioning reference signal and a second positioning reference signal, and the second positioning reference signal is sent by the second network device.

In a possible implementation, the second information includes non-terrestrial network assistance information, and the non-terrestrial network assistance information is used to determine the difference.

According to a fourth aspect, a communication method is provided. The method may be applied to a third network device. The method includes: receiving first information from a terminal device, where the first information is used to determine a difference between a first delay and a second delay, the first delay is a delay between a first network device and the terminal device, and the second delay is a delay between a second network device and the terminal device; and sending second information to the terminal device, where the second information is used to configure a search window, the search window is used by the terminal device to receive a first positioning reference signal from the first network device, and the second information is associated with the first information.

In a possible implementation, the first information includes at least one of the following: location information of the terminal device, or first delay information, and second delay information.

In a possible implementation, when the first information includes the location information of the terminal device, the first information further includes at least one of the following: first time information or second time information, where the first time information indicates generation time of the location information, and the second time information indicates validity duration of the location information.

In a possible implementation, the second information further indicates validity duration of the search window.

In a possible implementation, the method further includes: receiving a measurement result from the terminal device, where the measurement result is obtained by the terminal device by measuring the first positioning reference signal and a second positioning reference signal, and the second positioning reference signal is sent by the second network device.

According to a fifth aspect, a communication apparatus is provided, and is configured to perform the method in the first aspect. In a design, the apparatus may include a module/unit that is in one-to-one correspondence with the method/operation/step/action described in the first aspect. The module/unit may be implemented by a hardware circuit, software, or a combination of the hardware circuit and software. In another design, the apparatus includes: a transceiver unit, configured to receive first information, second information, and third information, where the first information includes a timing offset between a first network device and a second network device, the second information is used to calculate a difference between a first delay and a second delay, the first delay is a delay between the first network device and a terminal device, the second delay is a delay between the second network device and the terminal device, and the third information includes configuration information of a first positioning reference signal; and a processing unit, configured to determine a search window based on the first information, the second information, and the third information. The transceiver unit is further configured to receive, in the search window, the first positioning reference signal from the first network device.

In a possible implementation, the third information includes configuration information of a second positioning reference signal. The transceiver unit is further configured to receive the second positioning reference signal from the second network device. The processing unit is further configured to measure the first positioning reference signal and the second positioning reference signal, to obtain a measurement result. The transceiver unit is further configured to send the measurement result.

In a possible implementation, the second information includes non-terrestrial network assistance information, and the non-terrestrial network assistance information is used to determine the difference.

According to a sixth aspect, a communication apparatus is provided, and is configured to perform the method in the second aspect. In a design, the apparatus may include a module/unit that is in one-to-one correspondence with the method/operation/step/action described in the second aspect. The module/unit may be implemented by a hardware circuit, software, or a combination of the hardware circuit and software. In another design, the apparatus includes a transceiver unit, configured to send first information to a third network device, where the first information is used to determine a difference between a first delay and a second delay, the first delay is a delay between a first network device and a terminal device, and the second delay is a delay between a second network device and the terminal device. The transceiver unit is further configured to receive second information from the third network device, where the second information is used to configure a search window, and the second information is associated with the first information. The transceiver unit is further configured to receive, in the search window, a first positioning reference signal from the first network device.

In a possible implementation, the first information includes at least one of the following: location information of the terminal device, or first delay information between the terminal device and the first network device, and second delay information between the terminal device and the second network device.

In a possible implementation, when the first information includes the location information of the terminal device, the first information further includes at least one of the following: first time information or second time information, where the first time information indicates generation time of the location information, and the second time information indicates validity duration of the location information.

In a possible implementation, the second information further indicates validity duration of the search window.

In a possible implementation, the transceiver unit is further configured to receive a second positioning reference signal from the second network device. The communication apparatus further includes a processing unit, and the processing unit is further configured to measure the first positioning reference signal and the second positioning reference signal, to obtain a measurement result. The transceiver unit is further configured to send the measurement result to the third network device.

According to a seventh aspect, a communication apparatus is provided, and is configured to perform the method in the third aspect. In a design, the apparatus may include a module/unit that is in one-to-one correspondence with the method/operation/step/action described in the third aspect. The module/unit may be implemented by a hardware circuit, software, or a combination of the hardware circuit and software. In another design, the apparatus includes: a processing unit, configured to determine first information, second information, and third information, where the first information includes a timing offset between a first network device and a second network device, the second information is used to calculate a difference between a first delay and a second delay, the first delay is a delay between the first network device and a terminal device, the second delay is a delay between the second network device and the terminal device, and the third information includes configuration information of a first positioning reference signal; and a transceiver unit, configured to send the first information, the second information, and the third information to the terminal device, where the first information, the second information, and the third information are used to determine a search window, and the search window is used by the terminal device to receive the first positioning reference signal from the first network device.

In a possible implementation, the transceiver unit is further configured to receive a measurement result from the terminal device, where the measurement result is obtained by the terminal device by measuring the first positioning reference signal and a second positioning reference signal, and the second positioning reference signal is sent by the second network device.

In a possible implementation, the second information includes non-terrestrial network assistance information, and the non-terrestrial network assistance information is used to determine the difference.

According to an eighth aspect, a communication apparatus is provided, and is configured to perform the method in the fourth aspect. In a design, the apparatus may include a module/unit that is in one-to-one correspondence with the method/operation/step/action described in the fourth aspect. The module/unit may be implemented by a hardware circuit, software, or a combination of the hardware circuit and software. In another design, the apparatus includes a transceiver unit, configured to receive first information from a terminal device, where the first information is used to determine a difference between a first delay and a second delay, the first delay is a delay between a first network device and the terminal device, and the second delay is a delay between a second network device and the terminal device. The transceiver unit is further configured to send second information to the terminal device, where the second information is used to configure a search window, the search window is used by the terminal device to receive a first positioning reference signal from the first network device, and the second information is associated with the first information.

In a possible implementation, the first information includes at least one of the following: location information of the terminal device, or first delay information between the terminal device and the first network device, and second delay information between the terminal device and the second network device.

In a possible implementation, when the first information includes the location information of the terminal device, the first information further includes at least one of the following: first time information or second time information, where the first time information indicates generation time of the location information, and the second time information indicates validity duration of the location information.

In a possible implementation, the second information further indicates validity duration of the search window.

In a possible implementation, the transceiver unit is further configured to receive a measurement result from the terminal device, where the measurement result is obtained by the terminal device by measuring the first positioning reference signal and a second positioning reference signal, and the second positioning reference signal is sent by the second network device.

According to a ninth aspect, a communication apparatus is provided, and includes a processor. The processor is configured to enable, by executing a computer program or instructions or by using a logic circuit, the communication apparatus to perform the method according to any one of the first aspect and the possible implementations of the first aspect; or the communication apparatus to perform the method according to any one of the second aspect and the possible implementations of the second aspect; or the communication apparatus to perform the method according to any one of the third aspect and the possible implementations of the third aspect; or the communication apparatus to perform the method according to any one of the fourth aspect and the possible implementations of the fourth aspect.

In a possible implementation, the apparatus further includes a memory, and the memory is configured to store the computer program or the instructions.

Optionally, the processor and the memory are integrated together, or the processor and the memory are disposed separately.

In another possible implementation, the memory is located outside the communication apparatus.

In a possible implementation, the communication apparatus further includes a communication interface, and the communication interface is configured to input and/or output a signal.

For example, the communication interface may be a transceiver, a circuit, a bus, a module, or another type of communication interface.

According to a tenth aspect, a communication apparatus is provided, and includes a logic circuit and an input/output interface. The input/output interface is configured to output and/or input a signal. The logic circuit is configured to perform the method according to any one of the first aspect and the possible implementations of the first aspect; or the logic circuit is configured to perform the method according to any one of the second aspect and the possible implementations of the second aspect; or the logic circuit is configured to perform the method according to any one of the third aspect and the possible implementations of the third aspect; or the logic circuit is configured to perform the method according to any one of the fourth aspect or the possible implementations of the fourth aspect.

According to an eleventh aspect, a computer-readable storage medium is provided, and includes a computer program or instructions. When the computer program or the instructions are run on a computer, the computer is enabled to perform the method according to any one of the first aspect and the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect.

According to a twelfth aspect, a computer program product is provided, and includes instructions. When the instructions are run on a computer, the computer is enabled to perform the method according to any one of the first aspect and the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect.

According to a thirteenth aspect, a communication system is provided. The communication system includes a terminal device and a third network device. The terminal device is configured to perform the method according to any one of the first aspect and the possible implementations of the first aspect, and the third network device is configured to perform the method according to any one of the third aspect and the possible implementations of the third aspect. Alternatively, the terminal device is configured to perform the method according to any one of the second aspect and the possible implementations of the second aspect, and the third network device is configured to perform the method according to any one of the fourth aspect or the possible implementations of the fourth aspect.

For descriptions of beneficial effects of the third aspect to the thirteenth aspect, refer to descriptions of beneficial effects of the first aspect and the second aspect. Details are not described herein again.

**BRIEF DESCRIPTION OF DRAWINGS**

FIG. 1 is a diagram of an application scenario 100 according to an embodiment of this application;
FIG. 2 is a schematic interaction flowchart of a communication method 200 according to an embodiment of this application;
FIG. 3 is a first diagram of a search window configuration according to an embodiment of this application;
FIG. 4 is a schematic interaction flowchart of a communication method 400 according to an embodiment of this application;
FIG. 5 is a second diagram of a search window configuration according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application;
FIG. 9 is a block diagram of a communication apparatus 900 according to an embodiment of this application; and
FIG. 10 is a block diagram of a communication apparatus 1000 according to an embodiment of this application.

**DESCRIPTION OF EMBODIMENTS**

The following describes technical solutions in embodiments of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G, for example, a 6th generation (6th generation, 6G) system, or NTN systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device, or the satellite only transparently forwards a signal of the base station or the terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to both an FDD system and a TDD system. The technical solutions in this application are not only applicable to a low-frequency scenario (sub 6G), but also applicable to a high-frequency scenario (above 6 GHz), terahertz, optical communication, and the like. The technical solutions in this application are not only applicable to communication between a network device and a terminal, but also applicable to communication between network devices, communication between terminals, communication of an internet of vehicles, an internet of things, an industrial internet, and the like.

The technical solutions in embodiments of this application may also be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in this application are also applicable to a dual connectivity (dual connectivity, DC) scenario in which a terminal is connected to at least two base stations.

The technical solutions in embodiments of this application may also use a macro-micro scenario including different forms of base stations in a communication network. For example, the base station may be a satellite, an air balloon station, an uncrewed aerial vehicle station, or the like. The technical solutions in this application are also applicable to a scenario in which both a wide-coverage base station and a small-coverage base station exist.

The technical solutions in embodiments of this application may be applied to scenarios in which there is a high-reliability service requirement, for example, scenarios such as a port, industrial manufacturing, transportation, and coal mining.

The technical solutions in embodiments of this application may be further applied to 5.5G, 6G, and later wireless communication systems. Application scenarios include but are not limited to scenarios such as terrestrial cellular communication, NTN, satellite communication, high altitude communication platform (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in this application.

In embodiments of this application, a communication apparatus configured to implement a function of the terminal device may be a terminal device, or may be an apparatus that can support the terminal device in implementing the function, for example, a chip system. The apparatus may be installed in the terminal device or used together with the terminal device. In this application, the chip system may include a chip, or may include a chip and another discrete component.

The network device in embodiments of this application is a device having a wireless transceiver function, and is configured to communicate with the terminal device. An access network device may be a node in a radio access network (radio access network, RAN), may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include various forms of base stations, for example, a macro base station, a micro base station (also referred to as a small cell), a relay station, a transmit/receive point (transmitting and receiving point, TRP), a transmitting point (transmitting point, TP), a mobile switching center, a device that functions as a base station in device-to-device (device-to-device, D2D), vehicle-to-everything (vehicle-everything, V2X), and machine-to-machine (machine, M2M) communication, and a network device in an NTN communication system. This is not specifically limited in this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used together with the network device. In embodiments of this application, the chip system may include a chip, or may include a chip and another discrete component.

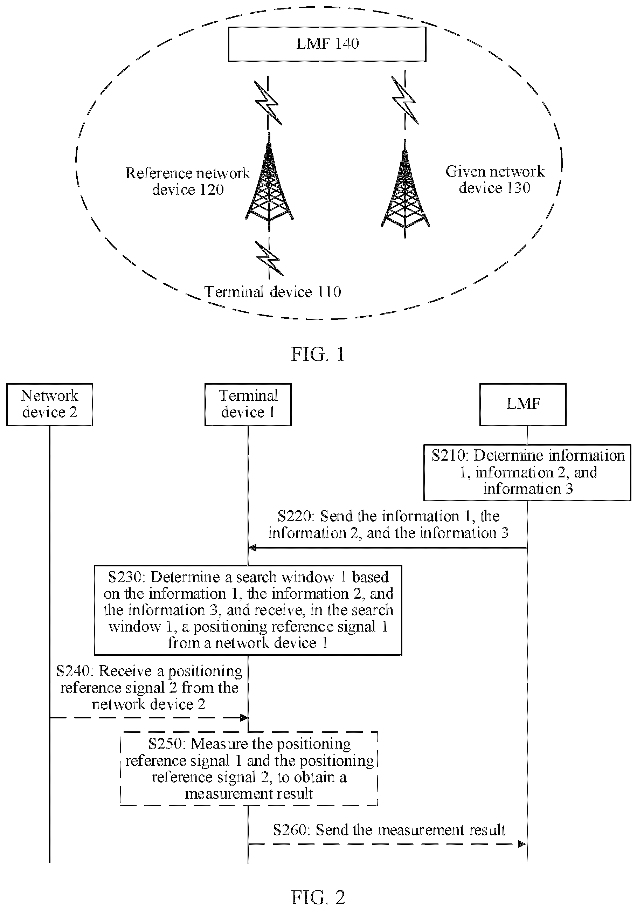

FIG. 1 is a diagram of an application scenario 100 according to an embodiment of this application. As shown in FIG. 1, a communication apparatus in the application scenario 100 includes a terminal device 110, a reference network device 120, a given network device 130 (which may alternatively be a neighboring network device 130, where the following uses the given network device 130 as an example for description), and an LMF 140. The terminal device 110 may be any type of terminal device described above, and the reference network device 120 and the given network device 130 may also be any type of network device described above. The reference network device 120 may alternatively be a reference TRP, and the given network device 130 may alternatively be a given TRP. The reference TRP and the given TRP may be deployed on a satellite device. For example, the reference network device 120 and the given network device 130 may be satellite devices.

It may be understood that a conventional positioning scenario is related to a terminal device and a plurality of network devices, and the terminal device may obtain a system frame number (system frame number, SFN) from at least one of the plurality of network devices. Generally, a network device from which the terminal device may obtain a system frame number may be referred to as a reference network device. For example, a serving network device that provides a service for the terminal device may be a reference network device. Another network device other than the reference network device may be referred to as a given network device (or may be a neighboring network device).

In the application scenario 100, the terminal device 110 needs to separately receive positioning reference signals from the reference network device 120 and the given network device 130, measure the positioning reference signals, and report a measurement result of the positioning reference signals to the LMF 140. It may be understood that all reference signals used for a positioning function may be referred to as positioning reference signals. This is not limited. Correspondingly, the LMF receives the measurement result from the terminal device 1, and may complete verification of a location of the terminal device 1 based on the measurement result. Alternatively, the LMF receives, from the terminal device 1, the measurement result of the positioning reference signals, determines a location of the terminal device 1 based on the measurement result, and sends the location of the terminal device 1 to a core network, and the core network completes verification of the location of the terminal device 110.

As described above, the terminal device 110 is connected to the reference network device 120, and may receive information sent by the reference network device 120. The terminal device 110 is not connected to the given network device 130. Because the terminal device 110 is not synchronized with the given network device 130, the terminal device 110 cannot receive information sent by the given network device 130.

For the reference network device 120, the terminal device 110 may directly receive a positioning reference signal from the reference network device 120. However, for the given network device 130, the terminal device can receive a positioning reference signal from the given network device 130 only by using configuration information (for example, including an expected (expected) reference signal time difference (reference signal time difference, RSTD) parameter, where the parameter is associated with the foregoing difference, and reference may be made to descriptions of the parameter in an existing protocol) that is of a search window (search window) and that is delivered by the LMF. There is an association relationship between the configuration information of the current search window and the foregoing difference.

In a terrestrial communication network (terrestrial network, TN) scenario, locations of the reference network device 120 and the given network device 130 (or the neighboring network device) are fixed. When the terminal device 110 is stationary or moves at a low speed, it may be considered that the foregoing difference is unchanged or changes slightly. Therefore, in the TN scenario, an association relationship between configuration information of a search window and the foregoing difference does not prevent the terminal device 110 from correctly receiving the positioning reference signal from the given network device 130.

However, in an NTN scenario, because locations of the reference network device 120 and the given network device 130 are not fixed, the foregoing difference is not fixed or changes greatly. If the LMF configures configuration information of a search window in the NTN scenario based on a configuration manner of the configuration information of the search window in the TN scenario, and delivers the configuration information of the search window to the terminal device 110 in the NTN scenario, search window time determined by using the configuration information of the search window is not the same as time when the terminal device 110 prepares to receive the positioning reference signal from the given network device 130, and a difference between a delay between the terminal device 110 and the given network device 130 and a delay between the terminal device 110 and the reference network device 120 may change greatly. As a result, the terminal device 110 may fail to correctly receive the positioning reference signal from the given network device 130. For example, in the NTN scenario, maximum location precision of the terminal device is 10 km, which is greater than maximum location precision (about 9.6 km) of the terminal device supported by the search window in the TN scenario. Alternatively, in the NTN scenario, a delay of the positioning reference signal sent by the given network device 130 to the terminal device 110 changes with movement of the given network device 130. The terminal device 110 may fail to receive, in the search window determined based on the configuration information that is of the search window and that is delivered by the LMF, the positioning reference signal from the given network device 130, and cannot measure the positioning reference signal and report the measurement result. This finally affects the verification of the location of the terminal device.

In view of the foregoing technical problems, this application provides a communication method and a communication apparatus, to support the terminal device in correctly receiving the positioning reference signal from the given network device or the neighboring network device in the NTN scenario.

The following further describes the communication method in embodiments of this application with reference to the accompanying drawings.

FIG. 2 is a schematic interaction flowchart of a communication method 200 according to an embodiment of this application. A method procedure in FIG. 2 may be performed by an LMF, a terminal device 1, and a network device 2, or may be performed by modules and/or components (for example, chips or integrated circuits) that can be installed in or connected to the LMF, the terminal device 1, and the network device 2 and that have corresponding functions. This is not limited. The following uses the LMF, the terminal device 1, and the network device 2 as an example for description. As shown in FIG. 2, the method 200 includes the following steps.

S210: The LMF determines information 1, information 2, and information 3.

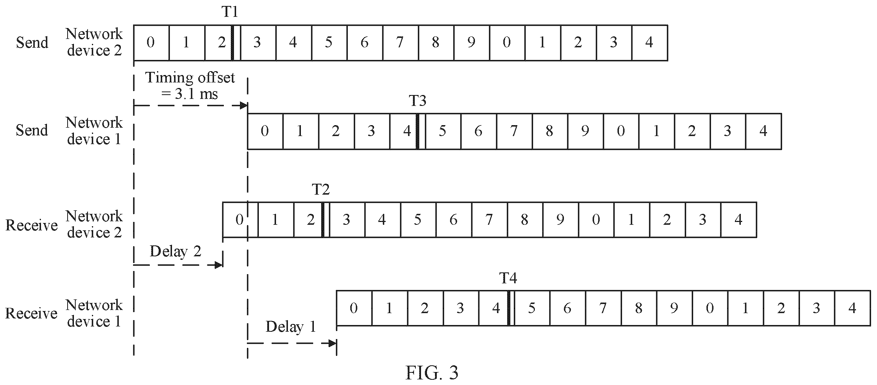

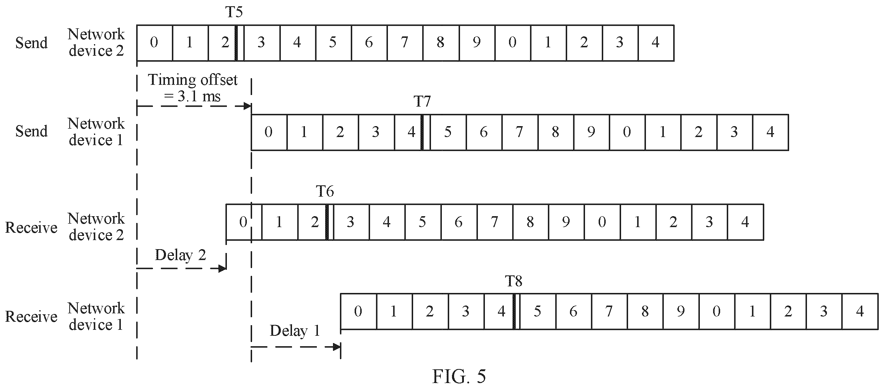

In S210, the information 1 to the information 3 can be used by the terminal device 1 to determine a search window 1. In an example, the information 1 indicates a timing offset between a network device 1 and the network device 2 (refer to FIG. 3 and FIG. 5). The information 2 is used by the terminal device 1 to calculate a difference A between a delay 1 and a delay 2 (for example, difference A= delay 1 - delay 2, or difference A= delay 2 - delay 1, which is not limited, and the former is used as an example for description). The delay 1 is a delay between the network device 1 and the terminal device 1, and the delay 2 is a delay between the network device 2 and the terminal device 1. The information 3 includes configuration information of a positioning reference signal 1, and the positioning reference signal 1 is sent by the network device 1 to the terminal device 1. Optionally, the information 3 may further include configuration information of a positioning reference signal 2, and the positioning reference signal 2 is sent by the network device 2 to the terminal device 1.

For example, the delay 1 may be a propagation delay of a service link between the terminal device 1 and the network device 1, may be a propagation delay of a complete link (a service link and a feeder link) between the terminal device 1 and the network device 1, may be a propagation delay of a feeder link between the terminal device 1 and the network device 1, or may be a combination thereof. The delay 2 may be the propagation delay of the service link between the terminal device 1 and the network device 2, may be the propagation delay of the complete link (the service link and the feeder link) between the terminal device 1 and the network device 2, may be the propagation delay of the feeder link between the terminal device 1 and the network device 2, or may be a combination thereof.

It may be understood that, when the delay 1 is propagation delay information of the service link between the terminal device 1 and the network device 1, the propagation delay of the complete link (the service link and the feeder link) between the terminal device 1 and the network device 1 may also be determined based on the propagation delay of the service link (the propagation delay of the feeder link may be estimated, to determine the propagation delay of the complete link). Similarly, this is also applicable to another scenario, and details are not described.

In S210, the timing offset between the network device 1 and the network device 2 indicated by the information 1 may be a time difference (which is absolute time) between a start moment of an SFN #0 of the network device 1 and a start moment of an SFN #0 of the network device 2. The SFN #0 of the network device 2 is an SFN #0 closest to the SFN #0 of the network device 1, or the SFN #0 of the network device 2 is a next SFN #0 or a previous SFN #0 of the SFN #0 of the network device 1. The timing offset between the network device 1 and the network device 2 indicated by the information 1 may alternatively be a timing difference (which is relative time) between the network device 1 and the network device 2, and the timing difference may be represented by a frame offset, an integer subframe offset, and a subframe offset. For example, if the timing offset between the network device 1 and the network device 2 is 23.1 ms, a frame offset of the network device 1 relative to the network device 2 is 2, an integer subframe offset of the network device 1 relative to the network device 2 is 3, and a subframe offset of the network device 1 relative to the network device 2 is 0.1.

In S210, the difference A between the delay 1 and the delay 2 corresponding to the information 2 is associated with locations of the network device 1 and the network device 2. For example, the information 2 includes a satellite ephemeris, and the terminal device 1 may determine, by using the satellite ephemeris, the location of the network device 1 and the location of the network device 2 through derivation, and determine the difference A between the delay 1 and the delay 2 through calculation with reference to a location of the terminal device 1.

In a possible implementation, the information 2 further includes common timing advance parameter information, K_mac, start time (epoch time) parameter information, validity duration (ntn-UlSyncValidityDuration) parameter information, cell identifier information (including a cell identifier of the network device 1 and a cell identifier of the network device 2), cell frequency information (including a cell frequency of the network device 1 and a cell frequency of the network device 2), and the like. The common timing advance parameter information is a common timing advance value controlled by a network side, and includes any timing offset considered necessary by the network side. K_mac is an offset provided by the network side when downlink frame timing is not aligned with uplink frame timing on the network side. The terminal device 1 may determine, by using a common timing advance parameter and a K_mac parameter, a propagation delay from a satellite to a base station or a terrestrial station. The start time and the validity duration can be used by the terminal device 1 to determine validity start time and duration of the information 2. In addition, the cell identifier information and the cell frequency information may be used by the terminal device 1 to associate the information 3 with the information 2. In other words, the information 3 may also include the cell identifier information and the cell frequency information. Optionally, the information 1 may also include the cell identifier information and the cell frequency information.

In a possible implementation, the information 2 may be NTN assistance information, and is used by the terminal device 1 to determine the difference A between the delay 1 and the delay 2 through calculation.

In a possible implementation, the information 2 may exist in a system information block (system information block, SIB), for example, a SIB 19. The terminal device 1 obtains the NTN assistance information by reading a SIB (for example, the SIB 19) from the network device 1 and/or the network device 2, and determines the difference A between the delay 1 and the delay 2 based on the NTN assistance information.

It may be understood that, that the information 2 is used to calculate the difference A between the delay 1 and the delay 2 may be: The terminal device 1 may determine the difference between the delay 1 and the delay 2 according to some parameters carried in the information 2 and a corresponding formula. The "calculation" may be an implementation in which the terminal device 1 determines the difference between the delay 1 and the delay 2, but another possible implementation is not limited.

In S210, the information 3 may further include the cell identifier information and the cell frequency information. The cell identifier information and the cell frequency information in the information 3 are consistent with the cell identifier information and the cell frequency information in the information 2. The terminal device 1 may associate the information 2 with the information 3 based on the cell identifier information and the cell frequency information.

In S210, the information 1 may further include the cell identifier information and the cell frequency information. The cell identifier information and the cell frequency information in the information 1 are consistent with the cell identifier information and the cell frequency information in the information 2. The terminal device 1 may associate the information 1, the information 2, and the information 3 based on the common cell identifier information and cell frequency information.

It may be understood that the network device 1 may be the given network device 130 or the neighboring network device 130, and the network device 2 may be the reference network device 120. As described above, the terminal device 1 may receive the positioning reference signal 2 from the network device 2. However, because the terminal device 1 is not connected to the network device 1, the terminal device 1 needs to determine the search window 1 based on the information 1 to the information 3, and receive, in the search window 1, the positioning reference signal 1 from the network device 1.

It may be further understood that in S210, the LMF may determine the information 2 by receiving the information 2 sent by another network device in a broadcast manner. This is not limited.

S220: The LMF sends the information 1, the information 2, and the information 3 to the terminal device 1.

Correspondingly, the terminal device 1 receives the information 1, the information 2, and the information 3 from the LMF.

It may be understood that a form in which the LMF sends the information 1 to the information 3 to the terminal device 1 is not limited. In an example, the LMF separately sends the information 1, the information 2, and the information 3 to the terminal device 1. In another example, the LMF sends one piece of information #a to the terminal device 1, and the information #a may carry content respectively carried in the information 1 to the information 3.

S230: The terminal device 1 determines the search window 1 based on the information 1, the information 2, and the information 3, and receives, in the search window 1, the positioning reference signal 1 from the network device 1. For specific descriptions of S230, refer to FIG. 3.

Specifically, the terminal device 1 determines the search window 1 based on the information 1 to the information 3 from the LMF, and receives, in the search window 1, the positioning reference signal 1 from the network device 1. The LMF does not deliver, to the terminal device 1, a configuration parameter of the search window associated with the difference, but sends, to the terminal device 1, the information 2 used to calculate the difference A. The terminal device 1 may determine the search window 1 based on the information 1 to the information 3, and correctly receive, in the search window 1, the positioning reference signal 1 from the network device 1. For specific descriptions of S230, refer to FIG. 3.

It may be understood that in S230, the terminal device 1 may alternatively obtain the information 2 from the network device 1 or the network device 2, and there is no limitation that the terminal device 1 can obtain the information 2 only from the LMF.

It may be further understood that a function of the LMF may alternatively be performed by a network device. The network device may be the network device 1, the network device 2, or another network device. This is not limited.

FIG. 3 is a first diagram of a search window configuration according to an embodiment of this application. As shown in FIG. 3, the terminal device 1 receives, at a moment T2, a subframe of the positioning reference signal 2 sent by the network device 2, and determines, through derivation based on the location of the network device 2 and the location of the terminal device 1, that the network device 2 sends, at a moment T1, the subframe of the positioning reference signal 2. The terminal device 1 determines, through derivation based on the timing offset between the network device 1 and the network device 2 and the configuration information of the positioning reference signal 1, that the network device 1 sends, at a moment T3, a subframe of the positioning reference signal 1, determines, through derivation based on the satellite ephemeris, a location of the network device 1 at the moment T3, and determines, through derivation based on the location of the terminal device 1 and the location of the network device 1, that the subframe of the positioning reference signal 1 sent by the network device 1 arrives at a moment T4.

It may be understood that, in FIG. 3, this embodiment of this application is described by using an example in which the timing offset between the network device 1 and the network device 2 is 3.1 ms, and the difference A between the delay 1 and the delay 2 is -0.2 ms. Specifically, manners in which the terminal device 1 determines the search window 1 based on the information 1 to the information 3 include:

Manner 1:

N = 10 * sfn-Offset + integerSubframeOffset + SubframeOffset + dl-PRS-ResourceSetSlotOffseti - dl-PRS-Resource-SetSlotOffsetRef = 0 + 3 + 0.1 + 4 - 2 = 5.1

$$Ti = TREF + N + \text{difference A} [(T4 - T3) - (T2 - T1)] = 2 + 5.1 - 0.2 = 6.9$$

$$(Ti - TREF) = 6.9 - 2 = 4.9$$

Specifically, the terminal device 1 may determine the parameter N based on the timing offset (including parameters such as sfn-Offset, integerSubframeOffset, and SubframeOffset) between the network device 1 and the network device 2 and the configuration information (including parameters such as dl-PRS-ResourceSetSlotOffseti and dl-PRS-ResourceSetSlotOffsetRef) of the positioning reference signal 1. In Manner 1, the timing offset between the network device 1 and the network device 2 may be reflected in a form of sfn-Offset, integerSubframeOffset, SubframeOffset, or the like. TREF is time when the terminal device 1 starts to receive the subframe of the positioning reference signal 2 sent by the network device 2, namely, the moment T2.

Further, the terminal device 1 determines, through derivation by using Ti = TREF + N + difference A, a center of the corresponding search window in which the positioning reference signal 1 sent by the network device 1 is received, namely, 6.9.

Manner 2:

N = 10 * sfn-Offset + integerSubframeOffset + dl-PRS-ResourceSetSlotOffseti - dl-PRS-ResourceSetSlotOffsetRef = 0 + 3 + 4 - 2 = 5

Ti = TREF + N + expectedRSTD-NTN + difference A [(T4 - T3) - (T2 - T1)] = 2 + 5 + 0.1 - 0.2 = 6.9

$$(Ti - TREF) = 6.9 - 2 = 4.9$$

Specifically, the LMF indicates the timing offset between the network device 1 and the network device 2 to the terminal device 1 by using parameters such as sfn-Offset and integerSubframeOffset. Precision of the timing offset in Manner 2 can only reach a millisecond level, and a granularity smaller than a millisecond cannot be represented. For example, if the timing offset between the network device 1 and the network device 2 is 23.1 ms, sfn-Offset is 2, and integerSubframeOffset is 3. In this case, an offset of 0.1 ms may be represented by using expectedRSTD-NTN, or by reusing an existing field nr-DL-PRS-ExpectedRSTD. If the existing field nr-DL-PRS-ExpectedRSTD is reused, the field indicates a subframe offset in the timing offset between the network device 1 and the network device 2. Therefore, the information 1 includes parameters such as sfn-Offset, integerSubframeOffset, and expectedRSTD-NTN, and the information 3 includes parameters such as dl-PRS-ResourceSetSlotOffseti and dl-PRS-ResourceSetSlotOffsetRef.

It may be understood that in Manner 1 and Manner 2, the difference A is determined by the terminal device 1 through calculation based on the information 2.

In conclusion, in this application, the terminal device 1 determines the difference A through calculation based on the information 2 delivered by the LMF, determines the appropriate search window 1 with reference to the timing offset between the network device 1 and the network device 2 and the configuration information of the positioning reference signal 1, and may correctly receive, in the search window 1, the positioning reference signal 1 from the network device 1.

According to the foregoing technical solution, in this application, the terminal device 1 can be supported in correctly receiving the positioning reference signal from the network device 1 in an NTN scenario, to complete verification of the location of the terminal device.

Optionally, in a possible implementation, the method 200 may further include the following steps.

S240: The terminal device 1 receives the positioning reference signal 2 sent by the network device 2.

S250: The terminal device 1 measures the positioning reference signal 1 and the positioning reference signal 2, to obtain a measurement result.

S260: The terminal device 1 sends the measurement result to the LMF.

Correspondingly, the LMF receives the measurement result from the terminal device 1, and may complete the verification of the location of the terminal device 1 based on the measurement result. Alternatively, the LMF receives, from the terminal device 1, the measurement result of the positioning reference signals, determines the location of the terminal device 1 based on the measurement result, and sends the location of the terminal device 1 to a core network, and the core network completes the verification of the location of the terminal device 110.

Specifically, the terminal device 1 receives the positioning reference signal 1 from the network device 1 by using S210 to S230, and may further receive the positioning reference signal 2 from the network device 2, and measure the positioning reference signal 1 and the positioning reference signal 2, to obtain the measurement result. Further, the terminal device 1 sends the measurement result to the LMF.

It may be understood that S240 may be performed before S210, or may be performed after S210. This is not limited.

According to the foregoing technical solution, completion of the verification of the location of the terminal device 1 is supported in this application.

Optionally, the terminal device 1 may measure the positioning reference signal 1 and the positioning reference signal 2 in a case that the terminal device 1 receives request information sent by the LMF. For example, the LMF sends the request information to the terminal device 1, and the request information is used to request the terminal device 1 to measure the positioning reference signals and report the measurement result. The LMF may send the request information to the terminal device 1 before S210 or after S210. This is not limited.

The following describes another communication method in embodiments of this application with reference to other accompanying drawings.

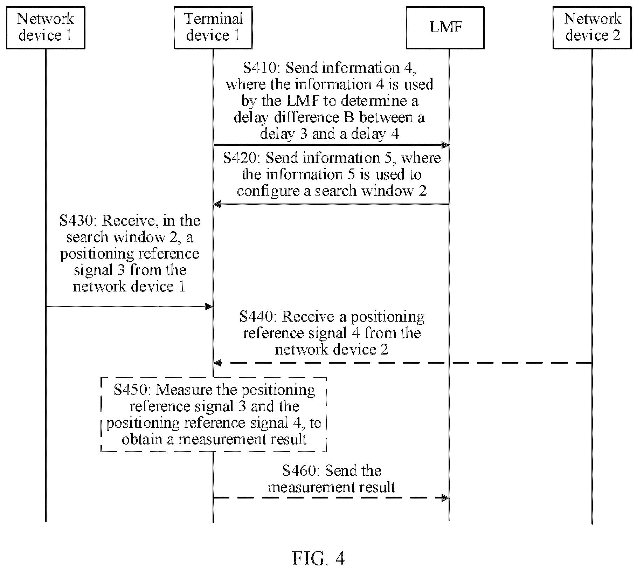

FIG. 4 is a schematic interaction flowchart of a communication method 400 according to an embodiment of this application. A method procedure in FIG. 4 may be performed by an LMF, a terminal device 1, a network device 1, and a network device 2, or may be performed by modules and/or components (for example, chips or integrated circuits) that can be installed in or connected to the LMF, the terminal device 1, the network device 1, and the network device 2 and that have corresponding functions. This is not limited. The following uses the LMF, the terminal device 1, the network device 1, and the network device 2 as an example for description. As shown in FIG. 4, the method 400 includes the following steps.

S410: The terminal device 1 sends information 4 to the LMF, where the information 4 is used by the LMF to determine a difference B between a delay 3 and a delay 4.

Correspondingly, the LMF receives the information 4 from the terminal device 1.

In S410, the information 4 is used by the LMF to determine the difference B between the delay 3 and the delay 4. The delay 3 is a delay between the network device 1 and the terminal device 1, and the delay 4 is a delay between the network device 2 and the terminal device 1. As described above, because a location of a network device in an NTN scenario constantly changes, if a search window in the NTN scenario is configured in a configuration manner of a search window in a TN scenario, the terminal device 1 is easily not capable of correctly receiving a positioning reference signal 3 from the network device 1. Consequently, verification of a location of the terminal device 1 cannot be completed. Therefore, in S410, the terminal device 1 sends, to the LMF, the information 4 used to determine the difference B, so that the LMF can properly configure a search window 2.

In a possible implementation, the information 4 includes location information a of the terminal device 1 (for example, global navigation satellite system (global navigation satellite system, GNSS) location information a of the terminal device 1), and the location information a can be used by the LMF to determine the difference B. Specifically, the LMF determines a location of the network device 1 and a location of the network device 2 through derivation based on a satellite ephemeris, and properly configures the search window 2 with reference to the location information a. The terminal device 1 can correctly receive, in the search window 2, the positioning reference signal 3 from the network device 1. In this way, the LMF can determine, through derivation based on the location information of the terminal device 1 and the locations of the network device 1 and the network device 2, the difference between the terminal device 1, the network device 1, and the network device 2, to properly configure information 5, so that the terminal device 1 can correctly receive the positioning reference signal 3 from the network device 1, to complete the verification of the location of the terminal device 1.

Optionally, the information 4 may further include at least one of time information 1 (for example, first time information) and time information 2 (for example, second time information). The time information 1 indicates generation time of the location information a, and the time information 2 indicates validity duration of the location information a. The LMF determines, based on the time information 1 or the time information 2, whether the location information a is outdated, to properly configure the search window 2, so that the terminal device 1 can correctly receive, in the search window 2, the positioning reference signal 3 from the network device 1. In this way, the LMF can determine whether the location information a of the terminal device 1 is outdated, to properly configure the search window 2.

In a possible implementation, the information 4 may include delay information 1 (for example, first delay information) between the terminal device 1 and the network device 1 and delay information 2 (for example, second delay information) between the terminal device 1 and the network device 2. The delay information 1 and the delay information 2 may be used by the LMF to determine the difference B.

Specifically, the delay information 1 may include service link propagation delay information between the terminal device 1 and the network device 1, may include complete link propagation delay information between the terminal device 1 and the network device 1, may include feeder link propagation delay information between the terminal device 1 and the network device 1, or may include a combination thereof. The delay information 2 may include the service link propagation delay information between the terminal device 1 and the network device 2, may include the complete link propagation delay information between the terminal device 1 and the network device 2, may include the feeder link propagation delay information between the terminal device 1 and the network device 2, or may include a combination thereof.

It may be understood that, when the delay information 1 includes the service link propagation delay information between the terminal device 1 and the network device 1, the complete link propagation delay information between the terminal device 1 and the network device 1 may also be determined based on the service link propagation delay information (a feeder link propagation delay may be estimated). Similarly, this is also applicable to another scenario.

It may be understood that the service link propagation delay is for a scenario in which a TRP is deployed on a satellite (or an uncrewed aerial vehicle). For example, both the network device 1 and the network device 2 are satellite devices. The complete link propagation delay is for a scenario in which a TRP is deployed on a base station (or a terrestrial station). For example, both the network device 1 and the network device 2 are terrestrial devices.

Optionally, the delay information 1 and the delay information 2 may further include timestamp information or validity duration information. Because a delay difference varies with time, when the timestamp information or the validity duration information is carried, the LMF may determine whether the delay information 1 and the delay information 2 are outdated.

In a possible implementation, when the terminal device 1 determines that a difference between a current difference between the delay information 1 and the delay information 2 and a difference reported last time is greater than a threshold, the terminal device 1 may send the latest difference between the delay information 1 and the delay information 2 to the LMF. The threshold may be configured by a network side or the LMF, or may be predefined. This is not limited.

In a possible implementation, the difference B is a difference between a delay determined by using the delay information 1 and a delay determined by using the delay information 2 (or the difference B is a difference between a delay determined by using the delay information 2 and a delay determined by using the delay information 1, and this is not limited). For example, the terminal device 1 reports, to the LMF, a propagation delay (determined by using the delay information 1) from the terminal device 1 to the network device 1 and a propagation delay (determined by using the delay information 2) from the terminal device 1 to the network device 2, and the difference B may be obtained through subtraction between the two propagation delays.

It should be noted that the LMF may alternatively obtain the information 4 from the network device 2. Specifically, when receiving the delay information 1 and the delay information 2 from the terminal device 1, the network device 2 sends the delay information 1 and the delay information 2 to the LMF. Alternatively, when the LMF requests TRP information (for example, positioning reference signal configuration information and TRP timing information) from the network device 2, the network device 2 configures, based on cells in which TRPs are located, the terminal device 1 to report service link propagation delays of cells in which different TRPs are located.

In a possible implementation, when the information 4 includes the location information a, the LMF may alternatively obtain the location information a from the network device 2 or an access and mobility management function (access and mobility management function, AMF).

It may be understood that the information 4 reported by the terminal device 1 to the LMF may include the difference B between the delay 3 and the delay 4, and the LMF may directly determine the difference B between the delay 3 and the delay 4 based on the information 4. Alternatively, the information 4 reported by the terminal device 1 to the LMF may include information used to determine the difference B between the delay 3 and the delay 4, and the LMF may determine the difference B between the delay 3 and the delay 4 based on the information 4. This is not limited.

S420: The LMF sends the information 5 to the terminal device 1, and the information 5 is used to configure the search window 2.

Correspondingly, the terminal device 1 receives the information 5 from the LMF, and determines the search window 2 based on the information 5.

Specifically, the information 5 may include a parameter for determining the search window 2 in the method 200. For specific descriptions of S420, refer to FIG. 5.

FIG. 5 is a second diagram of a search window configuration according to an embodiment of this application. As shown in FIG. 5, the LMF determines, through derivation based on a timing offset between the network device 1 and the network device 2 and configuration information of the positioning reference signal 3, time information for sending a positioning reference signal by the network device 1 and the network device 2. For example, the LMF determines that the network device 2 sends, at a moment T5, a subframe of the positioning reference signal 3, and the network device 1 sends, at a moment T7, a subframe of a positioning reference signal 4. The LMF predicts time when the terminal device 1 is triggered to perform positioning measurement and predicts time when the terminal device 1 may receive the positioning reference signals sent by the network device 1 and the network device 2. For example, the LMF determines that the terminal device 1 receives, at a moment T6, the subframe of the positioning reference signal 3, and that the terminal device 1 may receive, at a moment T8, the subframe of the positioning reference signal 4. A configuration of the search window 2 based on the moment T8 needs to be determined by the LMF based on the information 4.

Specifically, a manner in which the terminal device 1 determines the search window 2 based on the information 5 includes:

$$N = 10 * \text{sfn-Offset} + \text{integerSubframeOffset} + \text{dl-SRS-ResourceSetSlotOffset}i - \text{dl-PRS-ResourceSetSlotOffsetRef} = 0 + 3 + 4 - 2 = 5$$

$$\text{Ti} = \text{TREF} + \text{N} + \text{expectedRSTD} = 2 + 5 - 0.1 = 6.9$$

$$(\text{Ti} - \text{TREF}) = 6.9 - 2 = 4.9$$

Specifically, the information 5 includes parameters such as sfn-Offset, integerSubframeOffset, dl-PRS-ResourceSetSlotOffseti, dl-PRS-ResourceSetSlotOffsetRef, and expectedRSTD. There is an association relationship between the parameter expectedRSTD and the information 4. In other words, the LMF properly configures the parameter expectedRSTD based on the information 4.

S430: The terminal device 1 receives, in the search window 2, the positioning reference signal 3 from the network device 1.

In conclusion, in this application, the terminal device 1 exchanges information with the LMF, so that the LMF determines the difference B, and delivers a configuration parameter of the search window 2 to the terminal device 1. In this way, the terminal device 1 can correctly receive, in the search window 2, the positioning reference signal 3 from the network device 1.

According to the foregoing technical solution, in this application, the terminal device 1 can be supported in correctly receiving the positioning reference signal from the network device 1 in the NTN scenario, to complete the verification of the location of the terminal device.

Optionally, in a possible implementation, the method 400 may further include the following steps.

S440: The terminal device 1 receives the positioning reference signal 4 sent by the network device 2.

S450: The terminal device 1 measures the positioning reference signal 3 and the positioning reference signal 4, to obtain a measurement result.

S460: The terminal device 1 sends the measurement result to the LMF.

Correspondingly, the LMF receives the measurement result from the terminal device 1, and may complete the verification of the location of the terminal device 1 based on the measurement result. Alternatively, the LMF receives, from the terminal device 1, the measurement result of the positioning reference signals, determines the location of the terminal device 1 based on the measurement result, and sends the location of the terminal device 1 to a core network, and the core network completes the verification of the location of the terminal device 110.

Specifically, the terminal device 1 receives the positioning reference signal 4 from the network device 1 by using S410 to S430, and may further receive the positioning reference signal 4 from the network device 2, and measure the positioning reference signal 3 and the positioning reference signal 4, to obtain the measurement result. Further, the terminal device 1 sends the measurement result to the LMF.

In this way, the verification of the location of the terminal device 1 can be completed.

It may be understood that S440 may be performed before S410, or may be performed after S410. This is not limited.

Optionally, the terminal device 1 may measure the positioning reference signal 3 and the positioning reference signal 4 in a case that the terminal device 1 receives request information sent by the LMF. For example, the LMF sends the request information to the terminal device 1, and the request information is used to request the terminal device 1 to measure the positioning reference signals and report the measurement result. The LMF may send the request information to the terminal device 1 before S410 or after S410. This is not limited.

In a possible implementation, the information 5 may further indicate validity duration of the search window 2. The validity duration of the search window 2 is a specific validity time period of the search window 2. The validity time period may correspond to a timer, or may be represented by start time and duration. If the validity duration of the search window 2 corresponds to a timer, the terminal starts the corresponding timer after receiving the information 5. In this way, the terminal device 1 can receive, in the valid search window, the positioning reference signal 3 from the network device 1.

Further, if the timer corresponding to the validity duration of the search window 2 does not expire or the terminal device 1 determines that current time is within a range of the validity duration, the terminal device 1 determines a search window center and a size according to a search window center determining formula, to determine a search window size, and measures the positioning reference signal 1 and the positioning reference signal 2.

It may be understood that, in the method 200 and the method 400, a size of the search window 1 and a size of the search window 2 may be configured in a predefined manner, or may be configured in an indication manner. For example, the information 1 to the information 3 may further indicate the size of the search window 1, and the information 5 may further indicate the size of the search window 2. Alternatively, the LMF may send information 6 to the terminal device 1, and the information 6 indicates the size of the search window 1 or the size of the search window 2. This is not limited.

The foregoing describes the method embodiments in embodiments of this application, and the following describes corresponding apparatus embodiments.

To implement the functions in the foregoing methods provided in embodiments of this application, the terminal device and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

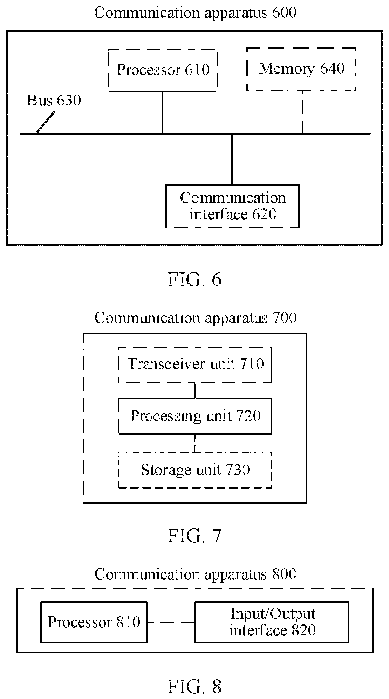

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. The communication apparatus 600 shown in FIG. 6 may be a terminal device 1, a network device 1, a network device 2, or an LMF.

Optionally, the communication apparatus 600 further includes a memory 640.

The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more central processing units (central processing units, CPUs). When the processor 610 is one CPU, the CPU may be a single-core CPU, or may be a multi-core CPU.

When the communication apparatus 600 is the terminal device 1, for example, the processor 610 is configured to perform the following operations: receiving information 1 to information 3; determining a search window 1 based on the information 1 to the information 3; and receiving, in the search window 1, a positioning reference signal 1 from the network device 1.

The foregoing content is merely used as an example for description. When the communication apparatus 600 is the terminal device 1, the communication apparatus 600 is responsible for performing the methods or steps related to the terminal device 1 in the foregoing method embodiments.

When the communication apparatus 600 is the LMF, for example, the processor 610 is configured to perform the following operations: determining information 1 to information 3, where the information 1 to the information 3 are used to determine a search window 1; and sending the information 1 to the information 3 to the terminal device 1.

The foregoing content is merely used as an example for description. When the communication apparatus 600 is the LMF, the communication apparatus 600 is responsible for performing methods or steps related to the LMF in the foregoing method embodiments.

When the communication apparatus 600 is the network device 1, for example, the processor 610 is configured to perform the following operations: sending a positioning reference signal 1 to the terminal device 1, and the like. Optionally, the processor 610 may further send information 2 to the terminal device 1.

When the communication apparatus 600 is the network device 2, for example, the processor 610 is configured to perform the following operation: sending a positioning reference signal 2 to the terminal device 1. Optionally, the processor 610 may further send information 2 to the terminal device 1.

The foregoing description is merely an example for description. For specific content, refer to the content shown in the foregoing method embodiments. In addition, for implementation of each operation in FIG. 6, refer to corresponding descriptions of the method embodiments shown in FIG. 2 and FIG. 4.

FIG. 7 is a block diagram of a communication apparatus 700 according to an embodiment of this application. The communication apparatus 700 may be the terminal device 1, the network device 1, the network device 2, or the LMF, or may be a chip or a module in the terminal device 1, the network device 1, the network device 2, or the LMF, and is configured to implement the methods in the foregoing embodiments. The communication apparatus 600 includes a transceiver unit 710 and a processing unit 720. The following describes the transceiver unit 710 and the processing unit 720 by using examples.

The transceiver unit 710 may include a sending unit and a receiving unit that are respectively configured to implement a sending function or a receiving function in the foregoing method embodiments, and may further include a processing unit, configured to implement a function other than the sending function or the receiving function.

When the communication apparatus 700 is the terminal device 1, for example, the transceiver unit 710 is configured to receive information 1 to information 3; the processing unit 720 is configured to determine a search window 1 based on the information 1 to the information 3; and the transceiver unit 710 is further configured to receive, in the search window 1, a positioning reference signal 1 from the network device 1.

Optionally, the communication apparatus 700 further includes a storage unit 730, and the storage unit 730 is configured to store a program or code used to perform the foregoing methods.

The foregoing content is merely used as an example for description. When the communication apparatus 700 is the terminal device 1, the communication apparatus 700 is responsible for performing the methods or steps related to the terminal device 1 in the foregoing method embodiments.

When the communication apparatus 700 is the LMF, for example, the processing unit 720 is configured to determine information 1 to information 3, where the information 1 to the information 3 are used to determine a search window 1; and the transceiver unit 710 is configured to send the information 1 to the information 3 to the terminal device 1.

Optionally, the communication apparatus 700 further includes a storage unit 730, and the storage unit 730 is configured to store a program or code used to perform the foregoing methods.

The foregoing content is merely used as an example for description. When the communication apparatus 700 is the LMF, the communication apparatus 700 is responsible for performing methods or steps related to the LMF in the foregoing method embodiments.

When the communication apparatus 700 is the network device 1, for example, the transceiver unit 710 is configured to send a positioning reference signal 1 to the terminal device 1, and the like. Optionally, the transceiver unit 710 may be further configured to send information 2 to the terminal device 1, and the like.

When the communication apparatus 700 is the network device 2, for example, the transceiver unit 710 is configured to send a positioning reference signal 2 to the terminal device 1, and the like. Optionally, the transceiver unit 710 may be further configured to send information 2 to the terminal device 1, and the like.

In addition, for implementation of each operation in FIG. 7, refer to corresponding descriptions of the methods shown in the foregoing embodiments. Details are not described herein again.

The apparatus embodiments shown in FIG. 6 and FIG. 7 are used to implement the content described in FIG. 2 and FIG. 4 in the foregoing method embodiments. Therefore, for specific execution steps and methods of the apparatuses shown in FIG. 6 and FIG. 7, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below.

FIG. 8 is a diagram of a communication apparatus 800 according to an embodiment of this application. The communication apparatus 800 may be configured to implement a function of the terminal device 1, the network device 1, the network device 2, or the LMF in the foregoing methods. The communication apparatus 800 may be a chip or a module in the terminal device 1, the network device 1, the network device 2, or the LMF.

The communication apparatus 800 includes an input/output interface 820 and a processor 810. The input/output interface 820 may be an input/output circuit. The processor 810 may be a signal processor, a chip, or another integrated circuit that can implement the method in this application. The input/output interface 820 is configured to input or output a signal or data.

For example, when the communication apparatus 800 is the terminal device 1, the input/output interface 820 is configured to receive information 1 to information 3; and the processor 810 is configured to determine a search window 1 based on the information 1 to the information 3. The processor 810 is configured to perform some or all steps of any method provided in this application. The input/output interface 820 may be further configured to receive, in the search window 1, a positioning reference signal 1 from the network device 1, and the like.

For example, when the communication apparatus 800 is the LMF, the processor 810 is configured to determine information 1 to information 3. The input/output interface 820 is configured to send the information 1 to the information 3 to the terminal device 1. The processor 810 is configured to perform some or all steps of any method provided in this application.

In a possible implementation, the processor 810 executes instructions stored in a memory, to implement the function implemented by the network device or the terminal device.

Optionally, the communication apparatus 800 further includes the memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the method in embodiments of this application.

The foregoing description of the apparatus in FIG. 8 is merely an example for description. The apparatus can be configured to perform the methods in the foregoing embodiments. For specific content, refer to the descriptions in the foregoing method embodiments. Details are not described herein again.

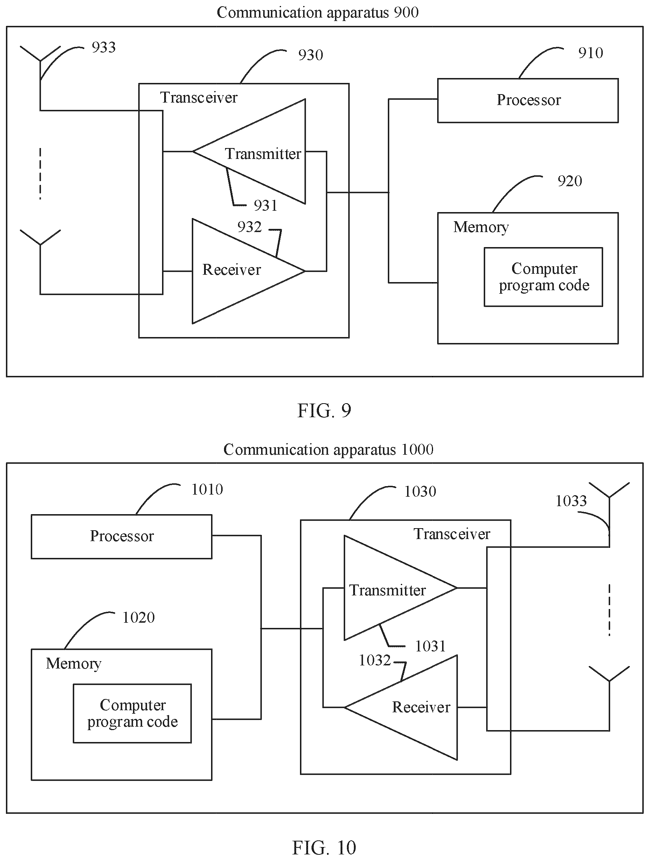

FIG. 9 is a block diagram of a communication apparatus 900 according to an embodiment of this application. The communication apparatus 900 may be a network device (including the network device 1 and the network device 2) or may be a chip. The communication apparatus 1200 may be configured to perform the operations performed by the network device in the foregoing method embodiments.

When the communication apparatus 900 is a network device, for example, a base station, FIG. 9 is a simplified diagram of a structure of the base station. The base station includes a part 910, a part 920, and a part 930. The part 910 is mainly configured to perform baseband processing, control the base station, and the like. The part 910 is usually a control center of the base station, may be usually referred to as a processor, and is configured to control the base station to perform a processing operation on the network device side in the foregoing method embodiments. The part 920 is mainly configured to store computer program code and data. The part 930 is mainly configured to receive and send a radio frequency signal, and perform conversion between the radio frequency signal and a baseband signal. The part 930 may be usually referred to as a transceiver module, a transceiver machine, a transceiver circuit, a transceiver, or the like. The transceiver module in the part 930 may also be referred to as a transceiver machine, a transceiver, or the like, and includes an antenna 933 and a radio frequency circuit (not shown in FIG. 9). The radio frequency circuit is mainly configured to perform radio frequency processing. Optionally, a component configured to implement a receiving function in the part 930 may be considered as a receiver, and a component configured to implement a sending function may be considered as a transmitter. In other words, the part 930 includes a receiver 932 and a transmitter 931. The receiver may also be referred to as a receiving module, a receiver machine, a receiver circuit, or the like, and the transmitter may be referred to as a transmitting module, a transmitter machine, a transmitter circuit, or the like.

The part 910 and the part 920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

In an implementation, the transceiver module in the part 930 is configured to perform a receiving and sending-related process performed by the network device in the embodiments shown in FIG. 2 to FIG. 4. The processor in the part 910 is configured to perform a processing-related process performed by the network device in the embodiments shown in FIG. 2 to FIG. 4.

In another implementation, the processor in the part 910 is configured to perform a processing-related process performed by a communication device in the embodiments shown in FIG. 2 to FIG. 4.

In another implementation, the transceiver module in the part 930 is configured to perform a receiving and sending-related process performed by a communication device in the embodiments shown in FIG. 2 to FIG. 4.

It should be understood that FIG. 9 is merely an example rather than a limitation, and the foregoing network device including the processor, the memory, and the transceiver may not depend on the structures shown in FIG. 6 to FIG. 8.

When the communication apparatus 900 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

FIG. 10 is a block diagram of a communication apparatus 1000 according to an embodiment of this application. The communication apparatus 1000 may be a terminal device 1 or a chip. The communication apparatus 1000 may be configured to perform the operation performed by the terminal device 1 in the foregoing method embodiments.

When the communication apparatus 1000 is the terminal device 1, FIG. 10 is a simplified diagram of a structure of the terminal device. As shown in FIG. 10, the terminal device 1 includes a processor, a memory, and a transceiver. The memory may store computer program code. The transceiver includes a transmitter 1031, a receiver 1032, a radio frequency circuit (not shown in FIG. 10), an antenna 1033, and an input/output apparatus (not shown in FIG. 10).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 10 merely shows one memory, one processor, and a transceiver. In an actual terminal device product, there may be one or more processors and one or more memories. The memory may also be referred to as a storage medium, a storage device, or the like. The memory may be disposed independent of the processor, or may be integrated with the processor. This is not limited in this application.

In this embodiment of this application, the antenna and the radio frequency circuit that have a transceiver function may be considered as a transceiver module of the terminal device, and the processor that has a processing function may be considered as a processing module of the terminal device.

As shown in FIG. 10, the terminal device includes a processor 1010, a memory 1020, and a transceiver 1030. The processor 1010 may also be referred to as a processing unit, a processing board, a processing module, a processing apparatus, or the like. The transceiver 1030 may also be referred to as a transceiver unit, a transceiver machine, a transceiver apparatus, or the like.

Optionally, a component for implementing a receiving function in the transceiver 1030 may be considered as a receiving module, and a component for implementing a sending function in the transceiver 1030 may be considered as a sending module. That is, the transceiver 1030 includes the receiver machine and the transmitter machine. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

For example, in an implementation, the processor 1010 is configured to perform a processing action on the terminal device 1 side in the embodiments shown in FIG. 2 to FIG. 4, and the transceiver 1030 is configured to perform receiving and sending actions on the terminal device 1 side in FIG. 2 to FIG. 4.

For example, in an implementation, the processor 1010 is configured to perform a processing action on the terminal device side in the embodiments shown in FIG. 2 to FIG. 4, and the transceiver 1030 is configured to perform receiving and sending actions on the terminal device 1 side in FIG. 2 to FIG. 4.

It should be understood that FIG. 10 is merely an example rather than a limitation. The foregoing terminal device including the transceiver module and the processing module may not depend on the structures shown in FIG. 6 to FIG. 8.

When the communication apparatus 1000 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor. The processor is configured to invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes the memory, and the memory is configured to store a computer program or the code.

This application further provides a processor, configured to be coupled to a memory, and configured to perform the method and the function that are relates to the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program runs on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In descriptions in embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

Any embodiment or design solution described by using "example" or "for example" in embodiments of this application should not be explained as being more preferred or having more advantages than another embodiment or design solution. Exactly, use of the term such as "example" or "for example" is intended to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A communication method, wherein the method is applied to a terminal device, and the method comprises:

   receiving first information, second information, and third information, wherein
   the first information comprises a timing offset between a first network device and a second network device, the second information is used to calculate a difference between a first delay and a second delay, the first delay is a delay between the first network device and the terminal device, the second delay is a delay between the second network device and the terminal device, and the third information comprises configuration information of a first positioning reference signal;
   determining a search window based on the first information, the second information, and the third information; and
   receiving, in the search window, the first positioning reference signal from the first network device.

2. The method according to claim 1, wherein the third information further comprises configuration information of a second positioning reference signal, and the method further comprises:

   receiving the second positioning reference signal from the second network device;
   measuring the first positioning reference signal and the second positioning reference signal, to obtain a measurement result; and
   sending the measurement result.

3. The method according to claim 1 or 2, wherein the second information comprises non-terrestrial network assistance information, and the non-terrestrial network assistance information is used to determine the difference.

4. A communication method, wherein the method is applied to a terminal device, and the method comprises:

   sending first information to a third network device, wherein the first information is used to determine a difference between a first delay and a second delay, the first delay is a delay between a first network device and the terminal device, and the second delay is a delay between a second network device and the terminal device;
   receiving second information from the third network device, wherein the second information is used to configure a search window, and the second information is associated with the first information; and
   receiving, in the search window, a first positioning reference signal from the first network device.

5. The method according to claim 4, wherein the first information comprises at least one of the following:

   location information of the terminal device;
   first delay information between the terminal device and the first network device; and
   second delay information between the terminal device and the second network device.

6. The method according to claim 5, wherein when the first information comprises the location information of the terminal device, the first information further comprises at least one of the following:

   first time information, wherein the first time information indicates generation time of the location information; and
   second time information, wherein the second time information indicates validity duration of the location information.

7. The method according to any one of claims 4 to 6, wherein the second information further indicates validity duration of the search window.

8. The method according to any one of claims 4 to 7, wherein the method further comprises:

   receiving a second positioning reference signal from the second network device;
   measuring the first positioning reference signal and the second positioning reference signal, to obtain a measurement result; and
   sending the measurement result to the third network device.

9. A communication method, wherein the method is applied to a third network device, and the method comprises:

   determining first information, second information, and third information, wherein
   the first information comprises a timing offset between a first network device and a second network device, the second information is used to calculate a difference between a first delay and a second delay, the first delay is a delay between the first network device and the terminal device, the second delay is a delay between the second network device and the terminal device, and the third information comprises configuration information of a first positioning reference signal; and
   sending the first information, the second information, and the third information to the terminal device, wherein the first information, the second information, and the third information are used to determine a search window, and the search window is used by the terminal device to receive the first positioning reference signal from the first network device.

10. The method according to claim 9, wherein the method further comprises:

    receiving a measurement result from the terminal device, wherein the measurement result is obtained by the terminal device by measuring the first positioning reference signal and a second positioning reference signal, wherein
    the second positioning reference signal is sent by the second network device.

11. The method according to claim 9 or 10, wherein the second information comprises non-terrestrial network assistance information, and the non-terrestrial network assistance information is used to determine the difference.

12. A communication method, wherein the method is applied to a third network device, and the method comprises:

receiving first information from a terminal device, wherein the first information is used to determine a difference between a first delay and a second delay, the first delay is a delay between a first network device and the terminal device, and the second delay is a delay between a second network device and the terminal device; and sending second information to the terminal device, wherein the second information is used to configure a search window, the search window is used by the terminal device to receive a first positioning reference signal from the first network device, and the second information is associated with the first information.

13. The method according to claim 12, wherein the first information comprises at least one of the following:

location information of the terminal device;
first delay information between the terminal device and the first network device; and
second delay information between the terminal device and the second network device.

14. The method according to claim 13, wherein when the first information comprises the location information of the terminal device, the first information further comprises at least one of the following:

first time information, wherein the first time information indicates generation time of the location information; and second time information, wherein the second time information indicates validity duration of the location information.

15. The method according to any one of claims 12 to 14, wherein the second information further indicates validity duration of the search window.

16. The method according to any one of claims 12 to 15, wherein the method further comprises:

receiving a measurement result from the terminal device, wherein the measurement result is obtained by the terminal device by measuring the first positioning reference signal and a second positioning reference signal, wherein
the second positioning reference signal is sent by the second network device.

17. A communication apparatus, comprising a processor, wherein the processor is configured to enable, by executing a computer program or instructions or by using a logic circuit,

the communication apparatus to perform the method according to any one of claims 1 to 3; or
the communication apparatus to perform the method according to any one of claims 4 to 8; or
the communication apparatus to perform the method according to any one of claims 9 to 11; or
the communication apparatus to perform the method according to any one of claims 12 to 16.

18. The communication apparatus according to claim 17, wherein the communication apparatus further comprises a memory, and the memory is configured to store the computer program or the instructions.

19. The communication apparatus according to claim 17 or 18, wherein the communication apparatus further comprises a communication interface, and the communication interface is configured to input and/or output a signal.

20. A communication apparatus, comprising a logic circuit and an input/output interface, wherein the input/output interface is configured to input and/or output a signal; and

the logic circuit is configured to perform the method according to any one of claims 1 to 3; or
the logic circuit is configured to perform the method according to any one of claims 4 to 8; or
the logic circuit is configured to perform the method according to any one of claims 9 to 11; or
the logic circuit is configured to perform the method according to any one of claims 12 to 16.

21. A computer-readable storage medium, wherein the computer-readable storage medium stores a computer program or instructions, and when the computer program or the instructions are run on a computer,

the method according to any one of claims 1 to 3 is performed; or

the method according to any one of claims 4 to 8 is performed; or
the method according to any one of claims 9 to 11 is performed; or
the method according to any one of claims 12 to 16 is performed.

22. A computer program product, comprising instructions, wherein when the instructions are run on a computer,

the method according to any one of claims 1 to 3 is performed; or
the method according to any one of claims 4 to 8 is performed; or
the method according to any one of claims 9 to 11 is performed; or
the method according to any one of claims 12 to 16 is performed.

23. A communication system, comprising a terminal device and a third network device, wherein

the terminal device is configured to perform the method according to any one of claims 1 to 3; and
the third network device is configured to perform the method according to any one of claims 9 to 11; or
the terminal device is configured to perform the method according to any one of claims 4 to 8; and
the third network device is configured to perform the method according to any one of claims 12 to 16.

FIG. 1

FIG. 2

FIG. 3

| Network device 1 | Terminal device 1 | LMF | Network device 2 |
|---|---|---|---|

S410: Send information 4, where the information 4 is used by the LMF to determine a delay difference B between a delay 3 and a delay 4

S420: Send information 5, where the information 5 is used to configure a search window 2

S430: Receive, in the search window 2, a positioning reference signal 3 from the network device 1

S440: Receive a positioning reference signal 4 from the network device 2

S450: Measure the positioning reference signal 3 and the positioning reference signal 4, to obtain a measurement result

S460: Send the measurement result

FIG. 4

FIG. 5

EP 4 611 287 A1

Communication apparatus 600

Processor 610

Memory 640

Bus 630

Communication
interface 620

FIG. 6

Communication apparatus 700

Transceiver unit 710

Processing unit 720

Storage unit 730

FIG. 7

Communication apparatus 800

Processor 810

Input/Output
interface 820

FIG. 8

Communication apparatus 900

FIG. 9

Communication apparatus 1000

FIG. 10

## INTERNATIONAL SEARCH REPORT

| International application No. |
|---|
| **PCT/CN2023/139174** |

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD, 3GPP: 定位参考信号, SRS, PRS, 窗, 时长, 时间, 周期, 搜索, 接收, 位置, 配置, 时延, 延时, 差值, position, location, reference signal, window, duration, time, periodic, search, reception, configuration, latency, delay, difference, TRP

### C. DOCUMENTS CONSIDERED TO BE RELEVANT

| Category* | Citation of document, with indication, where appropriate, of the relevant passages | Relevant to claim No. |
|---|---|---|
| X | CN 114650498 A (VIVO COMMUNICATION TECHNOLOGY CO., LTD.) 21 June 2022 (2022-06-21) abstract, and description, paragraphs 0042-0194 and 0565-0583, and figures 1-14 | 4-8, 12-23 |
| A | CN 114650498 A (VIVO COMMUNICATION TECHNOLOGY CO., LTD.) 21 June 2022 (2022-06-21) abstract, and description, paragraphs 0042-0194 and 0565-0583, and figures 1-14 | 1-3, 9-11 |
| A | CN 114142906 A (SPREADTRUM COMMUNICATIONS (SHANGHAI) CO., LTD.) 04 March 2022 (2022-03-04) entire document | 1-23 |
| A | US 2021320769 A1 (LG ELECTRONICS INC.) 14 October 2021 (2021-10-14) entire document | 1-23 |
| A | US 2022317230 A1 (QUALCOMM INCORPORATED) 06 October 2022 (2022-10-06) entire document | 1-23 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **19 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/139174**

| C. | DOCUMENTS CONSIDERED TO BE RELEVANT | |
|---|---|---|
| Category* | Citation of document, with indication, where appropriate, of the relevant passages | Relevant to claim No. |
| A | INTERDIGITAL INC. "Discussion on end-to-end latency reduction for DL/UL positioning" *3GPP RAN WG2 Meeting #112-e R2-2008886,* 13 November 2020 (2020-11-13), entire document | 1-23 |
| A | EP 4047999 A1 (LG ELECTRONICS INC.) 24 August 2022 (2022-08-24) entire document | 1-23 |

Form PCT/ISA/210 (second sheet) (July 2022)

## INTERNATIONAL SEARCH REPORT
### Information on patent family members

International application No.

**PCT/CN2023/139174**

| Patent document cited in search report | | | Publication date (day/month/year) | Patent family member(s) | | | Publication date (day/month/year) |
|---|---|---|---|---|---|---|---|
| CN | 114650498 | A | 21 June 2022 | None | | | |
| CN | 114142906 | A | 04 March 2022 | None | | | |
| US | 2021320769 | A1 | 14 October 2021 | WO | 2020050646 | A1 | 12 March 2020 |
| US | 2022317230 | A1 | 06 October 2022 | WO | 2022213008 | A1 | 06 October 2022 |
| | | | | CN | 117121424 | A | 24 November 2023 |
| | | | | KR | 20230163417 | A | 30 November 2023 |
| EP | 4047999 | A1 | 24 August 2022 | KR | 20220084061 | A | 21 June 2022 |
| | | | | US | 2023221397 | A1 | 13 July 2023 |
| | | | | WO | 2021075851 | A1 | 22 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211640739X

- CN 202310144904